# EUROPEAN PATENT APPLICATION

(11) **EP 2 048 727 A2**
(43) Date of publication of application: **15.04.2009**
(21) Application number: 08166431.0
(22) Date of filing: 13.10.2008
(51) Int. Cl.: H01M 4/14, H01M 10/12, H01M 10/14, H01M 4/68, H01G 9/155

(54) **Battery electrode assembly**

(30) Priority: 13.10.2007 DE 102007049178
(71) Applicant: ABERTAX RESEARCH AND DEVELOPMENT LTD., Paola, PLA 08 (MT)
(72) Inventor: Florin, Martin, 57319 Bad Berleburg (DE); Cilia, Joseph, Zebbug (MT); Schmidt, Werner, 86938 Schondorf (DE); Schembri, George, Birkirkara (MT)
(74) Representative: Gustorf, Gerhard

(57) **Abstract**

1. Battery Electrode Assembly
2. The new battery electrode assembly (10) comprises a carrier (12) of thin non-conductive sheet material covered with at least one thin strip or layer of conductive material forming an electrode (14).
3. Figure 1.

## Description

The present invention relates to battery electrode assemblies.

At present, electrodes for batteries made up of lead or lead alloy are formed as plates which are manufactured by casting or injection-casting of lead. This technology uses a large amount of lead to reach a level of conductivity necessary for rapid charging and discharging. In fact the amount of lead is much higher than required for storage of electric energy. The lead used for conductivity is covered with lead oxide, which immersed in acid is transformed during the charging process into lead (-) and lead dioxide (+) and reconverted to lead oxide during discharging.

It is an object of the invention to minimize the use of metal, particularly lead or lead alloy, in electrodes for batteries.

More particularly, the purpose of the invention is to develop an electrode assembly for batteries which has substantially more capacity per volume and weight than in present technology batteries.

According to the invention, said object is achieved by an assembly as set forth in claim 1. Further characteristics and embodiments are mentioned in the dependent claims.

Since batteries based on this invention use only a fraction of the metal (lead, amalgamated lead) necessary to build present technology batteries they will be much lighter and smaller.

The production process for such new battery types shall eliminate much of the health risks and environmental disadvantages of the present lead-acid battery production.

The invention will allow the production of batteries, among them also lead-acid batteries, with much less weight and volume per capacity. This advantage is important for instance in mobile applications like electric vehicles. The use of lead will be reduced substantially which is important in view of the environmental hazards attributed to lead. The production process of the new battery will eliminate melting and casting of lead with all the health- and environmental risks; the application of the thin strips and metal layers on the carrier material can be automated.

The invention will now be described in detail with reference to some preferred embodiments illustrated in the drawings in which:
figure 1 is a schematic section of an electrode assembly according to the invention,
figure 2 is a modified embodiment showing a twin electrode assembly,
figure 3 is a further embodiment with two stacked electrode assemblies forming a capacitor,
figure 4 is a modified sketch of a capacitor version,
figure 5 is a variant on figure 4,
figure 6 shows schematically another embodiments and
figure 7 illustrates the possibility of a rolled assembly shown in figure 6.

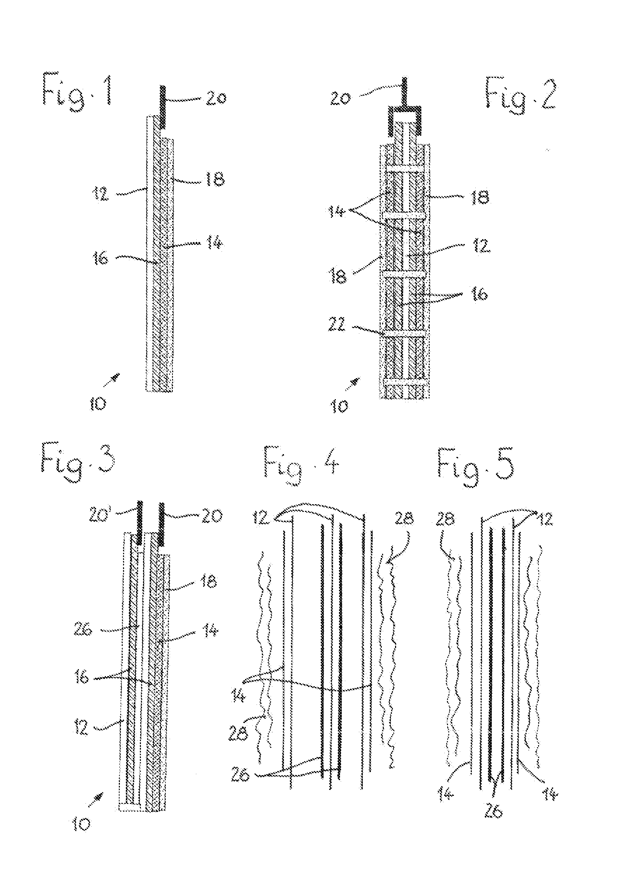

As illustrated in figure 1, the electrode assembly 10 comprises a carrier 12 of a thin non-conductive acid proof sheet material like polypropylene or polyester. Said insulating carrier 12 is at least partly perforated or porous in order to allow the passage of an electro-chemically active mass. As electro-chemically active material forming the electrode 14 a thin film layer or strip of conductive material like lead or carbon is brought onto said carrier 12. In the embodiment of figure 1, a thin intermediate layer 16 of conductive material is applied between the carrier 12 and said electrode 14. The intermediate layer 16 may be of conductive material like copper or silver or carbon.

The desired degree of conductivity is achieved by said intermediate layer 16 applied between the insulating surface of the carrier 12 and the electrode 14. In this context, reference is made to the earlier Abertax patent application 10 1007 014 255.4 of 24.03.2007.

The electrode 14 is covered by an outer thin film layer 18 of active material, e.g. a spongy lead or lead paste in contact with the electrolyte.

An electrode plate connecting terminal 20 is fastened to the upper end of the intermediate layer 16.

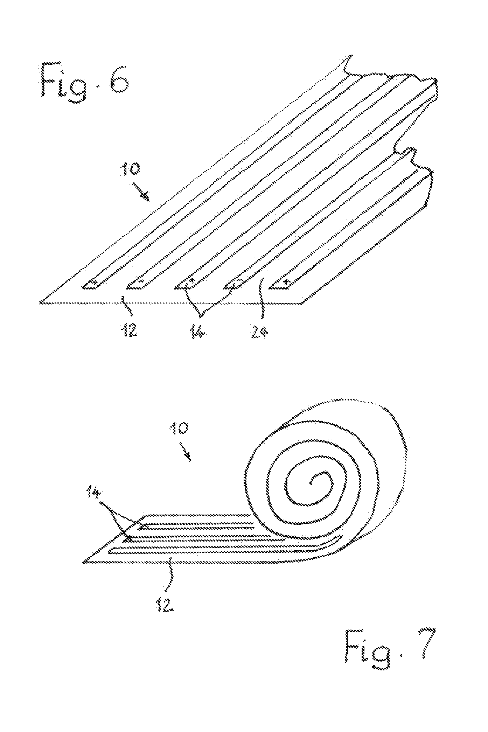

The carrier 12, the strip electrode 14 and the layers 16 have a very small thickness of some micrometers only. This reduces drastically the weight of a battery and allows the electrode assembly 10 to be stacked (figure 2) or rolled (figure 7), if necessary with acid or acid paste in between the stacked or rolled layers to achieve a maximum electro-chemically active surface with little volume. The acid can alternatively be applied to both surfaces of the insulating but perforated or porous plastic carrier 12 or can be soaked in a thin spongy textile structure of the outer layer 18.

Figure 2 shows an alternative embodiment of the invention according to which the carrier 12 is covered on both surfaces with said layers 16, 14, 18 such that a twin electrode assembly 10 is formed. Connecting bridges 22 of active material are inserted into holes provided in said layers 16, 14, 18 and in the carrier 12.

Figure 3 illustrates the possibility to stack two or more electrode assemblies 10 according to the invention such that a capacitor is formed. In this embodiment, one of the electrode assemblies 10 forms, together with an electrically insulated conductive layer 26, stacked or rolled together with the electrodes assemblies 10, said capacitor. The capacitor can act for instance, as a buffer for rapid charging or discharging a battery. Its connecting terminal 20' is fastened to the upper end of the intermediate layer 16.

Figure 4 shows schematically another capacitor version in which two conductive layers 26 are applied to both sides of a carrier 12 placed between two further carriers 12 which are provided at their outer surface with the electrodes 14 reacting with the electro-chemically active mass 28 as e.g. an acid liquid or an acid paste.

In figure 5 a modified embodiment is shown in which two conductive layers 26 are placed back to back between two carriers 12.

In the embodiment of figure 6 is illustrated that a plurality of thin strips each forming a positive or negative electrode 14 are placed side-by-side on a carrier 12 leaving an insulating distance 24 therebetween. Also such electrode assembly 10 can be rolled (see figure 7) or stacked, where necessary with an insulating intermediate layer (not shown), and electrically connected to form a multi-layer battery pack.

## Claims

1. Battery electrode assembly, **characterized in that** it comprises a carrier (12) of thin non-conductive acid proof sheet material and at least one electrode (14) in the form of a thin strip of conductive, electro-chemically reactive material brought onto said carrier (12).

2. Battery electrode assembly according to claim 1, wherein a plurality of electrodes (14) in the form of thin strips are placed side-by-side on one or both sides of said carrier (12) with an insulating distance (24).

3. Battery electrode assembly according to claim 1, wherein a plurality of electrodes (14) in the form of thin strips are applied each on a separate carrier (12), said carriers (12) to be composed to a battery.

4. Battery electrode assembly according to any of the preceding claims, wherein said carrier (12) is made of plastic like polypropylene or polyester.

5. Battery electrode assembly according to any of the preceding claims, wherein said carrier (12) is made at least partly of a porous sheet material allowing electro-chemical reactions between both sides of the carrier (12).

6. Battery electrode assembly according to any of the preceding claims, wherein said thin strips forming the electrodes (14) are made up of carbon or of a metal like lead.

7. Battery electrode assembly according to any of the preceding claims, wherein a thin intermediate layer (16) of conductive material is applied between the carrier (12) and each of said strips forming the electrodes (14).

8. Battery electrode assembly according to claim 7, wherein said intermediate layer (16) is made of conductive material like copper or silver or carbon.

9. Battery electrode assembly according to any of the preceding claims, wherein said strips forming the electrodes (14) are covered by an outer film layer (18) of active material like spongy lead or lead paste.

10. Battery electrode assembly according to any of the preceding claims, wherein the carrier (12) is covered on both surfaces with at least one of said layers (16, 18) and strip electrodes (14) such that a twin electrode assembly (10) is formed.

11. Battery electrode assembly according to any of the preceding claims, wherein an additional conductive layer (26) is inserted with sheet carrier insulation against the strip electrodes (14) thus forming a capacitor with said electrodes (14).

12. Battery electrode assembly according to any of the preceding claims, **characterized in that** it is rolled to form a multi-layer battery pack.

13. Battery electrode assembly according to any of the preceding claims 1 to 11, wherein at least two electrode assemblies (10) are stacked and electrically connected to form a multi-layer battery pack.

14. Battery electrode assembly according to claim 12 or 13, wherein the stacked or rolled layers are insulated by intermediate non-conductive layers.

15. Battery electrode assembly according to any of the preceding claims, wherein said layers (16, 18) and strip electrodes (14) are applied by printing, spraying, plasma coating or the like.
